# EUROPEAN PATENT SPECIFICATION

(11) **EP 4 497 233 B1**
(45) Date of publication and mention of the grant of the patent: **06.05.2026**
(21) Application number: 23700217.5
(22) Date of filing: 11.01.2023
(51) Int. Cl.: H04L 67/10

(54) **METHODS AND DEVICES FOR ENABLING UE TO ACCESS EDGE SERVICE**
VERFAHREN UND VORRICHTUNGEN ZUR ERMÖGLICHUNG DES ZUGRIFFS EINES BENUTZERGERÄTS AUF EINEN EDGE-DIENST
PROCÉDÉS ET DISPOSITIFS PERMETTANT À UN UE D'ACCÉDER À UN SERVICE PÉRIPHÉRIQUE

(30) Priority: 21.03.2022 SE 2250349
(43) Date of publication of application: 29.01.2025
(73) Proprietor: Sony Group Corporation, Tokyo 108-0075 (JP); Sony Europe B.V., Weybridge, Surrey KT13 0XW (GB)
(72) Inventor: ALNÅS, Svante, Basingstoke Hampshire RG22 4SB (GB)
(74) Representative: Neij & Lindberg AB
(86) International application number: PCT/EP2023/050575
(87) International publication number: WO 2023/179926

(56) References cited:
- EP-A1- 3 860 048
- US-A1- 2017 359 843
- US-A1- 2020 329 109

## Description

### Technical field

This disclosure relates to the field of accessing Edge services provided for wireless devices connected in a wireless network. Specifically, solutions are proposed for enabling wireless devices to detect available Edge services and to identify a corresponding mapping to logical connections that support such Edge service from a current wireless network node.

### Background

Wireless devices may be configured according to various protocols for communication with different networks by radio communication. A wide variety of systems for radio communication are set up under the provisions of the 3^{rd} Generation Partnership Project (3GPP), including cellular systems and wireless local area networks often referred to as Wi-fi. The wireless devices are often referred to as User Equipment (UE), and are configured to wirelessly communicate with a network backbone, or core network (CN) via one or more access nodes. Such access nodes may be identified by different terms based on the protocol used, and in cellular communications they are often referred to as base stations. For the example of 5G networks, the access node is referred to as a gNB.

As technology advances, and the wireless system protocols are developed, the processing and communication capability of UEs increases. A UE may be devised to carry out different tasks based on which application is run on the UE, and requirements may be different between different applications. For certain types of applications, where communication through the wireless network may be inadequate, so-called Edge computing can be used to assist proper operation of the application. Edge computing is a distributed computing paradigm that brings computation and data storage closer to the location where it is needed, i.e. closed to the UE on which an application client runs, e.g. to improve response times and save bandwidth. Edge computing may e.g. be used for latency-sensitive applications such as multi-player video games. When using an Edge system, the application client connects to an Edge host, operated on an Edge server, also referred to as an Edge application server (EAS). Various computing tasks may then be off-loaded to the EAS.

Typically, an EAS can be accessed using any available network connection, and UEs may in this respect use a "best effort" approach to select the data network to use. In this respect, the UE may e.g. automatically switch between different connections through the wireless network and different available Wi-Fi connections. This may result in undue network traffic, in particular when the Edge service is available locally in the wireless network to which the UE is connected. A related problem is when a UE is roaming, i.e. when it visits another wireless network than its home wireless network. To access an EAS for using an Edge service locally, i.e. in the current, visited, wireless network to which the UE is attached, the UE needs to set up a new logical connection to a local data network providing access to that EAS.

An approach to tackle these problems has been to allow the wireless network to configure the UE with UE Route Selection Policy (URSP) rules for different traffic routing. All of these rules are delivered from the home network HPLMN (Home Public Land Mobile Network) to the UE. The HPLMN is not expected to be aware of all Edge configuration in all visiting networks (VPLMN) the UE may visit. Moreover, many UEs usually don't support the URSP rules. Document US 2020/329109 Al discloses a method of discovering edge-servers and services through domain name server (DNS) resolution in a mobile edge computing (MEC) platform based network.

### Summary

In view of the foregoing, there exists a need for improvement in the art of controlling a UE with regard to Edge server access, to improve access to an Edge service. A solution to this problem is set out in the independent claims.

A method is provided for use in a CN of a wireless network to enable a UE to obtain a data network interface for using an Edge service, the method comprising:
receiving, by a network function of the CN, a registration message from at least one Edge application server, EAS, accessible from a data network comprised in the wireless network and having said data network interface;
providing, by the network function responsive to receiving the registration message, a network node with information identifying association of the EAS with the data network interface, wherein said information is usable by the UE for identifying the network interface for accessing the Edge service.

Moreover, a method is provided for use in a UE for identifying a data network interface of a current wireless network for accessing an Edge service, the method comprising:
transmitting, to at least one network node, a request message comprising an indication of the Edge service to obtain identification of the data network interface associated with the Edge service;
receiving, from one of said nodes, a response message comprising information enabling the UE to identify the data network interface for accessing the Edge service.

By means of the proposed solution, the wireless network may configure the way the UE finds appropriate address information to configure the UE to connect to a local data network in a wireless network to access an Edge service.

Various embodiments and detailed solutions are set out in the dependent claims and further discussed in the description below.

### Brief description of the drawings

The proposed solution is described in more detail below with reference to the accompanying drawings, in which various examples of realizing the solutions are outlined.
Fig. 1 schematically illustrates a wireless network architecture for the example of a 5G system, representing a context in which the proposed solution may be employed.
Fig. 2 schematically illustrates a UE configured to operate in accordance with the examples laid out herein.
Fig. 3 schematically illustrates a logical node configured to operate in or in connection with a wireless network, configured to operate in accordance with different examples of the proposed solution laid out herein.
Fig. 4 is a flow chart of a method carried out in a logical node according to various aspects associated with the proposed solution.
Fig. 5 is a flow chart of a method carried out in UE according to various aspects associated with the proposed solution.
Fig. 6A is a signaling diagram related to a first aspect of the proposed solution.
Fig. 6B is a signaling diagram showing an alternative solution to the first aspect of the proposed solution.
Fig. 7 is a signaling diagram related to a second aspect of the proposed solution.
Fig. 8 is a signaling diagram related to a third aspect of the proposed solution.

### Detailed description

In the following description, for purposes of explanation and not limitation, details are set forth herein related to various examples. However, it will be apparent to those skilled in the art that the present disclosure may be practiced in other examples that depart from these specific details. In some instances, detailed descriptions of well-known devices, circuits, and methods are omitted so as not to obscure the description of the present disclosure with unnecessary detail. The functions of the various elements including functional blocks, including but not limited to those labeled or described as "computer", "processor" or "controller", may be provided through the use of hardware such as circuit hardware and/or hardware capable of executing software in the form of coded instructions stored on computer readable medium. Thus, such functions and illustrated functional blocks are to be understood as being either hardware-implemented and/or computer-implemented and are thus machine-implemented. In terms of hardware implementation, the functional blocks may include or encompass, without limitation, digital signal processor (DSP) hardware, reduced instruction set processor, hardware (e.g., digital or analog) circuitry including but not limited to application specific integrated circuit(s) (ASIC), and (where appropriate) state machines capable of performing such functions. In terms of computer implementation, a computer is generally understood to comprise one or more processors or one or more controllers, and the terms computer and processor and controller may be employed interchangeably herein. When provided by a computer or processor or controller, the functions may be provided by a single dedicated computer or processor or controller, by a single shared computer or processor or controller, or by a plurality of individual computers or processors or controllers, some of which may be shared or distributed. Moreover, use of the term "processor" or "controller" shall also be construed to refer to other hardware capable of performing such functions and/or executing software, such as the example hardware recited above.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

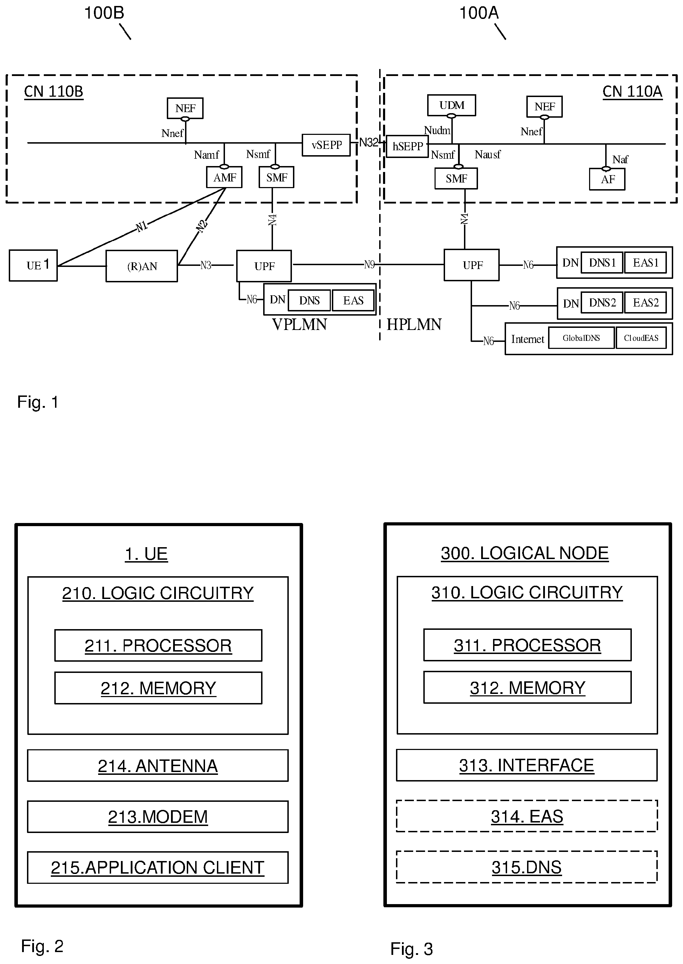

Fig. 1 schematically illustrates a wireless communication system architecture, providing an example of a scenario in which the solutions provided herein may be incorporated. By way of example, network nodes and functions are provided using 5G terminology, but it shall be understood that corresponding elements and functions may be employed in other wireless systems, such as further releases of 3GPP standards.

The drawing indicates a first wireless network 100A, wherein a UE 1 is registered as a subscriber to the operator of the network 100A. The first wireless network 100A is therefore denoted the home network, HPLMN. The drawing further indicates a second wireless network 100B, which the UE 1 may visit. The second wireless network 100B is therefore denoted the visiting network, VPLMN. The drawings shows a number of network functions and elements, which may exist in both networks 100A and 100B. By way of example, though, some network functions are only shown in one of the wires networks. The first 100A and second 100B wireless networks may be operated by and belong to different operators. The first wireless network 100A may thus alternatively be referred to as a first operator network, whereas the second wireless network 100B may alternatively be referred to as a second operator network.

The first wireless network 100 comprises a core network (CN) 110A, which as such comprises a number of CN nodes. In this context, it shall be noted that such nodes may be logical nodes that realize a certain network function, and need not represent a physical node. The network functions shown in Fig. 1 are as such legacy to 5G and well understood. With reference to the drawing, the CN 110A may e.g. comprise a UDM node (Unified data management), configured to manage network user data in a single, centralized element. CN 110A may further comprise a NEF (Network Exposure Function) node, a functional element that supports exposure of network capabilities and events provided by 3GPP Network Functions to an application function. The NEF may further be used for accessing untrusted EASs external to the network 100A. Further comprised is an AF (Application Function), which supports application influence on traffic routing, accessing NEF, interaction with policy framework for policy control. An SMF (Session Management function) supports session management, such as session establishment, modification, and release, UE IP address allocation & management, etc. A SEPP (Security Edge Protection Proxy) node enables secure interconnect between 5G networks. The wireless network 100A further comprises a UPF (User Plane Function), which is responsible for packet routing and forwarding, packet inspection, QoS handling, and external PDU (protocol data unit) session for interconnecting Data Network (DN) in the 5G architecture. In the context of 5G, the PDU Session provides a logical connection between applications on a UE and a data network (DN) such as the Internet or private corporate networks. The drawing also indicates that each DN provides connectivity to Domain Name System (DNS) server. The DNS server 140 is configured to provide addresses, e.g. IP addresses, to Edge computing resources in accordance with a DNS configuration, based on a DNS request comprising a domain name address. The DNS server may thus be configured to identify IP addresses to an associated EAS for an application client in the UE 1 to use.

The corresponding network functions may, as mentioned, be comprised in the second wireless network 100B. In the drawing, the UE 1 is located in range of the second wireless network, to which it may connect using a Radio Access Network (RAN) comprising base stations, connected to the CN 110B. For this purpose, the CN 110B (and correspondingly the CN 100A) comprises an AMF (Access and Mobility Management function) which supports, inter alia, termination of NAS signaling, NAS ciphering & integrity protection, and manages registration, connection, mobility, access authentication and authorization, and security context.

Fig. 2 schematically illustrates an example of how the UE 1 is configured, for use according to the solutions presented herein.

The UE 1 comprises a modem 213 for communicating with other entities of the wireless networks 100A, 100B. The modem 213 may thus include a radio receiver and transmitter for communicating through at least an air interface for communication through the RAN.

The UE 1 may further comprise an antenna system 214, which may include one or more antenna arrays. In various examples the antenna system 214 comprises different antenna elements configured to communicate with the wireless network 100. The antenna system 214 is connected to the modem 213 for obtaining wireless communication.

The UE 1 further comprises logic circuitry 210 configured to communicate data, via the modem 213, on a radio channel, to at least the wireless communication network 100.

The logic circuitry 210 may include a processing device 211, including one or multiple processors, microprocessors, data processors, co-processors, and/or some other type of component that interprets and/or executes instructions and/or data. The processing device 211 may be implemented as hardware (e.g., a microprocessor, etc.) or a combination of hardware and software (e.g., a system-on-chip (SoC), an application-specific integrated circuit (ASIC), etc.). The processing device 211 may be configured to perform one or multiple operations based on an operating system and/or various applications or programs.

The logic circuitry 210 may further include memory storage 212, which may include one or multiple memories and/or one or multiple other types of storage media. For example, the memory storage 212 may include a random access memory (RAM), a dynamic random access memory (DRAM), a cache, a read only memory (ROM), a programmable read only memory (PROM), flash memory, and/or some other type of memory. The memory storage 212 may include a hard disk (e.g., a magnetic disk, an optical disk, a magneto-optic disk, a solid state disk, etc.). The memory storage 212 is configured for holding computer program code, which may be executed by the processing device 211, wherein the logic circuitry 210 is configured to control the UE 1 to carry out any of the method steps as provided herein. Software defined by said computer program code may include an application or a program that provides a function and/or a process. The software may include device firmware, an operating system (OS), or a variety of applications that may execute in the logic circuitry 210.

The drawing further illustrates an application client 215, stored in memory on the UE, which application client may operate in conjunction with an EAS to use an Edge service.

Obviously, the UE 1 may include other features and elements than those shown in the drawing or described herein, such as a power supply, a casing, a user interface, sensors, etc., but these are left out for the sake of simplicity.

Fig. 3 schematically illustrates an example of a logical node 300 associated with a wireless network, such as networks 100A or 100B. It shall be understood that the logical node 300 may be configured to realize a certain network function, such as a CN function, and need not represent a physical node. In other examples, the logical node 300 may realize a data network, or an entity of a data network, connected in or to the wireless network. More detailed examples will be provided further below.

The logical node 300 comprises logic circuitry 310 including hardware and/or software to operate in or with the CN, such as 110A or 110B of the respective wireless network. It shall be understood that the logical node may be distributed in various different elements, which collectively may co-operate to operate the methods proposed herein.

The logic circuitry 310 may include a processing device 311, including one or multiple processors, microprocessors, data processors, co-processors, and/or some other type of component that interprets and/or executes instructions and/or data. The processing device 311 may be implemented as hardware (e.g., a microprocessor, etc.) or a combination of hardware and software (e.g., a system-on-chip (SoC), an application-specific integrated circuit (ASIC), etc.). The processing device 311 may be configured to perform one or multiple operations based on an operating system and/or various applications or programs.

The logic circuitry 310 may further include memory storage 312, which may include one or multiple memories and/or one or multiple other types of storage mediums. For example, the memory storage 312 may include a random access memory (RAM), a dynamic random access memory (DRAM), a cache, a read only memory (ROM), a programmable read only memory (PROM), flash memory, and/or some other type of memory. The memory storage 312 may include a hard disk (e.g., a magnetic disk, an optical disk, a magneto-optic disk, a solid state disk, etc.). The memory storage 312 is configured for holding computer program code, which may be executed by the processing device 311, wherein the logic circuitry 310 is configured to control the logical node 300 to carry out any of the method steps as provided herein. Software defined by said computer program code may include an application or a program that provides a function and/or a process. The software may include device firmware, an operating system (OS), or a variety of applications that may execute in the logic circuitry 310.

The logical node 300 may further comprise an interface 313 for communicating with other entities, such as other network nodes or functions.

Various examples of the proposed solution will not be described with reference to the drawings. Initially, and as a basis covering the various examples, a general presentation of the proposed solution will be described by reference to flowcharts.

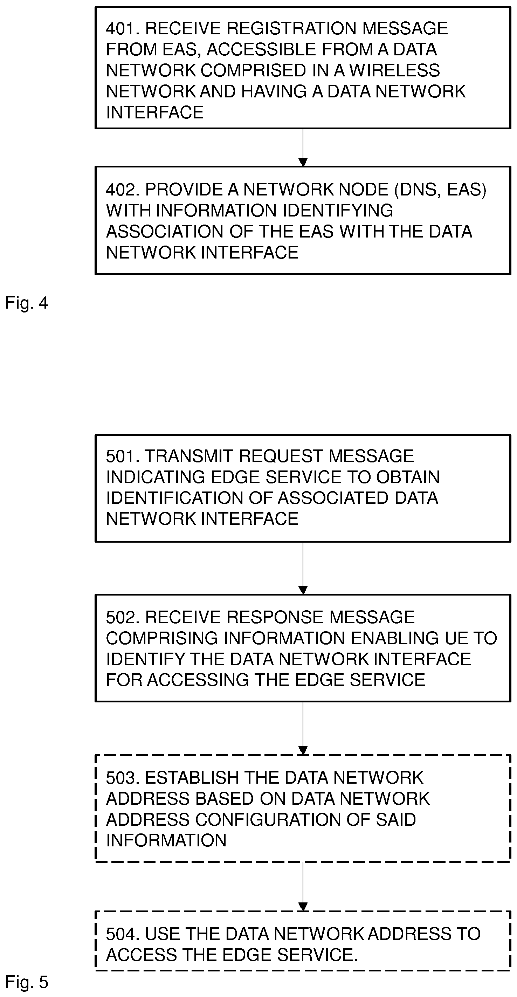

Fig. 4 is a flowchart indicating a general concept of the proposed solution in the form of method steps carried in a CN of a wireless network to enable a UE to obtain a data network interface for using an Edge service. The method comprises:
receiving 401, by a network function of the CN, a registration message from at least one EAS accessible from a data network comprised in a network
providing 402, by the network function responsive to receiving the registration message, a network node with information identifying association of the EAS with the data network interface, wherein said information is usable by the UE for identifying the network interface for accessing the Edge service.

The reception of the registration message, and the actions taken in response thereto, provide for defining an association of an EAS, usable for providing an Edge service, with a data network interface. This association may subsequently be obtained by the UE 1, based on the information provided to the network function in response to the registration message, such as by an application 215 client in the UE 1. The information may in some examples identify the network interface, and in some examples identify configuration for establishing the network interface. Based on that information, the UE 1 is enabled and configured to obtain access to the Edge service by connection to the data network which is local to a current wireless network in which the UE 1 is located. In other words, the information is usable by the UE for determining the network interface for accessing the Edge service. Specifically, the UE 1 may be configured to use that network interface for accessing the Edge service, so as to prevent an application client in the UE 1 which runs the Edge application from switching to a best effort connection to access an EAS outside the current wireless network.

Fig. 5 is a flowchart indicating a general concept of the proposed solution in the form of method steps carried in a UE 1 for identifying, or in other words determining, a data network interface of a current wireless network for accessing an Edge service. The method comprises:
transmitting 501, to at least one network node, a request message comprising an indication of the Edge service to obtain identification of the data network interface associated with the Edge service;
receiving 502, from one of said nodes, a response message comprising information enabling the UE to identify the data network interface for accessing the Edge service.

In this context, the purpose of the UE 1 being configured to transmit the request message is the obtainment in the UE 1 of the mentioned association of an Edge service and a network interface for accessing that Edge service. This is provided by obtainment of the information enabling the UE to identify, or in other words determine, the data network interface. Specifically, where a local network interface is available in the current wireless network for accessing the Edge service, the information may configure the UE 1 to use that network interface. The response message may identify the network interface, or provide configuration based on which the UE 1 is configured to establish the network interface. This method thus provides for enabling the UE 1 to obtain access to the Edge service by connection to the data network which is local to a current wireless network in which the UE 1 is located. The Edge service may as such be identified by a Fully Qualified Domain Name (FQDN).

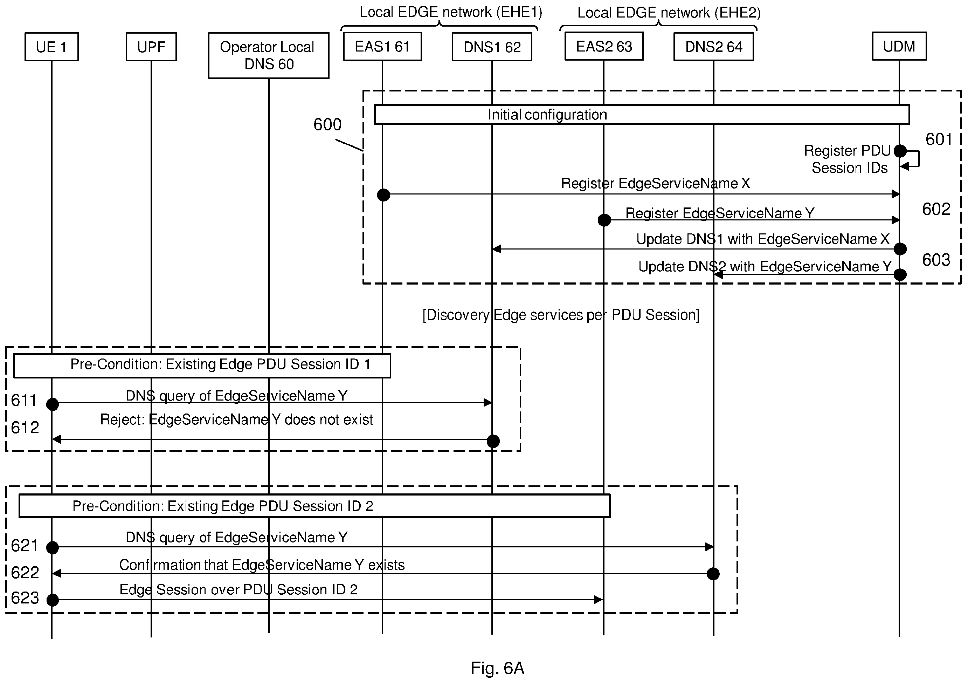

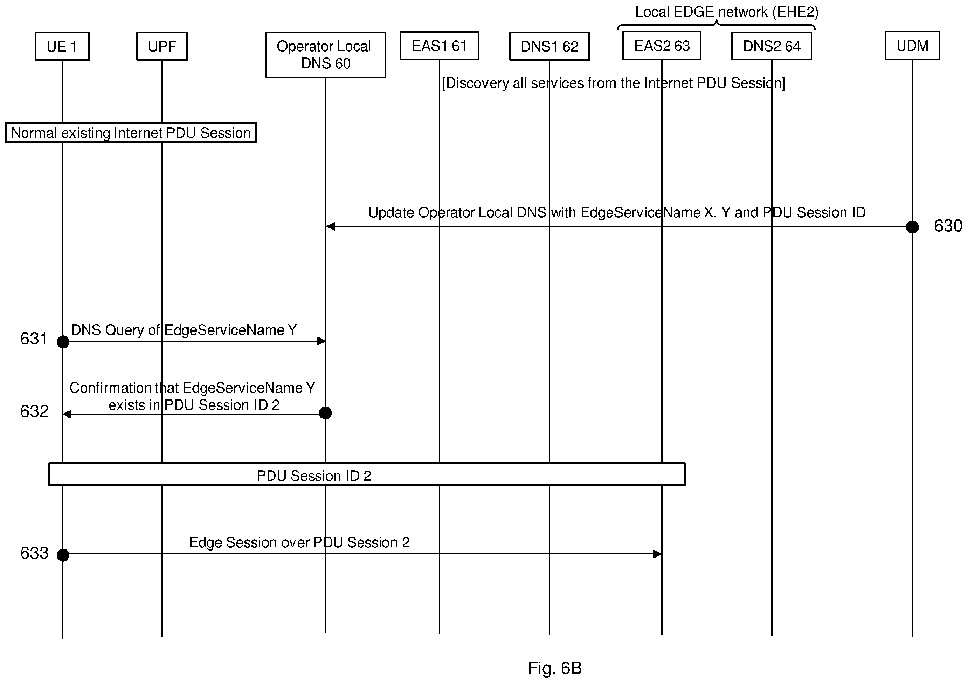

Various examples of the proposed solution will now be described with reference to Figs 6-9. These examples all fall within the scope of the general solutions outlined with reference to Figs 4 and 5. It shall be noted that while the proposed solution may be set out in different types of wireless systems, the examples provided herein are mainly presented in the context of improvement of a 5G 3GPP system. In this context, it may be noted that a connection between a UE and a data network interface is denoted a PDU Session, where PDU originates from the term Protocol Data Unit. The PDU Session may be identified by a name of the data network, which makes it possible to transmit one or more IP packets. An identifier of a PDU Session may be referred to as a PDU Session ID, e.g. tied to an operator ABC of a wireless network. Such PDU Session IDs may, by way of example, be "online.abc.se" or "mms.abc.se".

Currently the only way to set up a new PDU Session is from the UE, the network is only able to cancel or modify an existing one. In theory the existing URSP framework most likely works only when LBO (Local Break Out) is used for edge related traffic, which means that a new PDU Session is not used. In for example V-PLMN 100B, some traffic (all edge related traffic) is diverted to a local Edge server in V-PLMN while all remaining traffic continues to the UPF that terminate the PDU Session in H-PLMN 100A.

Hitherto, there have been no standardization effort to determine how applications 215 in the UE 1 identifies different PDU Sessions. Rather, the common solution employed today is that e.g. Google and Apple have specified their own (and different) identifiers for the Internet PDU Session and the IMS PDU Session. This allows for example applications in Android to use Google's identifier and bind a data session to the PDU Session that is used by the UE for internet via the operator, or the opposite only use the Wi-Fi connection. This allows applications to use that defined network connection if it is available, regardless of other connection becoming available which are more preferable from a networking routing perspective, such as a local connection to an EAS providing the application.

In contrast, an improved situation would be support specific PDU Sessions used for Edge-related traffic only. Such new PDU Sessions need to have new identifiers and most likely different names per operator since one PDU session for Edge will most likely not be sufficient. So for example operator ABC may decide to use two new PDU Sessions: "ABCEdgeV2XTraffic" and "ABCGames" and other operators may use different names of the corresponding identifiers for the same Edge service in their networks. Each PDU Session may include information to the UE which DNS server to use for that PDU Session. In addition an application on Google Play that runs on the UE in any operator network with existing Google APIs is able to identify the PDU Session Google has defined.

However, when new PDU Sessions, one for each EHE (Edge Hosting Environment), is defined, there is no existing mapping for the UE application 215 to identify which PDU Session to use for each specific Edge service.

As noted, current specifications allow the wireless network to configure the UE with URSP rules for different traffic routing. These rules are delivered from the HPLMN 100A to the UE 1. The HPLMN 100A is not expected to be aware of all Edge configuration in all VPLMN 100B the UE 1 may visit. Another issue is that UEs may not support the URSP rules. For UEs using e.g. android and iOS new functionality is required to be able to support URSP rules in the UE OS and/or a modified TCP/IP stack for this.

According to various aspects, the proposed solution addresses how a UE shall be configured to avoid switching away from an Edge Computing PDU Session tied to a wireless network. Specifically, the proposed solution is to use what is already supported in UEs of today, occasionally referred to as smart phones, rather than building on the URSP solution. Today, UEs support one single TCP/IP stack with multiple network connections and allows application to decide which network connection (PDU Session) to use, instead of using "best effort internet". The normal "best effort internet" is when the UE/device OS automatically continuously select the "best" network connection to use and automatically switches between 3GPP network and different available Wi-Fi connections. With this setup, the application does not need to do anything. In the past, desktop OSes in general allowed applications to select network connection based on IP address but android and iOS now support that on network connection instead. This allows the UE to have two or more different PDU sessions with the same IP address in the UE. As long as the application in the UE is aware of which PDU Session to use for what traffic, there is a basis for allowing applications in the UE to ensure that for example Edge-related traffic is always sent to the PDU Session that must be used to access the Edge server.

The proposed solution is to use existing functionality in the UE in a controlled way, thus avoiding use of URSP rules for Edge-related traffic. According to a first aspect, the proposed solution entails that the application in the UE is able to retrieve which PDU Session that must be used for the Edge related traffic from the operators DNS system. The proposed solution is in this aspect not related to configuring or setting up new PDU Sessions, but how the application in the UE detects which one of the existing PDU Sessions that should be used for a specific Edge service. This solution works with H-PLMN 100A and V-PLMN 100B.

Applications in smartphone UEs are already today able to bind to specific network interface and use that specific interface for all network traffic including DNS lookup. The proposed solution according to the first aspect is related to using a local DNS server, per PDU Session, to allow the UE application to detect which Edge services that is available via that PDU Session. This allows the UE application to scan the different network connections for available services.

Fig. 6A provides a signaling diagram according to this first aspect of the proposed solution. Reference is here made to the wireless network 100A, whereas the corresponding method may be carried out in wireless network 100B.

Label 600 indicates configuration in the wireless network 100A to accomplish enablement of the UE 1 to obtain a data network interface, i.e. a PDU Session, for using an Edge service. This provides a method for use in the CN 110A of the wireless network 100A to enable the UE 1 to obtain a data network interface, such as a PDU Session, for using an Edge service. According to this aspect, the method may be set out in a network function, such as a UDM of the CN 110A, in which existing PDU Sessions are registered 601. The method comprises:
Receiving 602, by the network function (UDM), a registration message from at least one Edge application server, EAS, 61, 63 accessible from a data network comprised in the wireless network 100A and having an identified PDU Session. This corresponds to Step 401.

Providing 603, by the network function (UDM) responsive to receiving the registration message, a local DNS server 62, 64, 60 of said data network with information identifying association of the EAS with the PDU Session, wherein said information is usable by the UE for identifying the PDU Session for accessing the Edge service. This corresponds to Step 402.

As noted in the drawing, these steps may be carried out for the EAS of each local network edge, EHE1, EHE2, in the wireless network 100A.

In this context, the CN of the wireless network 100A comprises:
logic circuitry 310 configured to realize a CN function such as the UDM; and
a communication interface 313 allowing the CN function to communicate with an EAS, or an application function, AF, operating for the EAS;
wherein the logic circuitry controls the CN to operate to enable the UE 1 to obtain a PDU Session for accessing an Edge service.

The UE 1 may subsequently obtain the PDU Session for locally accessing the Edge service in the wireless network 100A. This may be accomplished by the UE application 215 sending a normal DNS query, e.g. to an operator-specific DNS server. The operator-specific DNS server may have been received by the UE 1 as result from the from a PDU Session Establishment or modification request.

According to this first aspect, a method is provided for use in the UE 1 for identifying a PDU Session of a current wireless network 110A, i.e. the wireless network in which the UE 1 is located and typically connected, for accessing an Edge service. The method comprises:
transmitting 611, 621, to at least one network node comprising a local DNS server 62, 64, a request message comprising an indication of the Edge service to obtain identification of the PDU Session associated with the Edge service. This corresponds to Step 501.

Receiving 622, from one of said nodes 64, a response message comprising information enabling the UE 1 to identify the PDU Session for accessing the Edge service. This corresponds to Step 502.

In the lower part of Fig. 6A, obtainment of the PDU Session for locally accessing the Edge service is carried out per PDU Session to discover what Edge Services that is available on the respective PDU Session. This may involve sending a DNS query. By way of example, the UE 1 may first query 611 to a local DNS server of a certain local edge network, associated with a first existing PDU Session, and upon said query being rejected, or responded with an indication of non-existence of the Edge service, , indicating unavailability 612 of the indicated Edge service, the UE 1 may secondly query 621 a local DNS server of a second local edge network associated with a second existing PDU Session. Upon obtaining confirmation that the indicated Edge service exists, the UE 1 is configured to use that second existing PDU Session for accessing 623 the Edge service, corresponding to Step 504. The request message to obtain identification of the PDU Session associated with the Edge service may thus simply comprise sending an indication of the Edge service to an existing PDU Session, whereas receiving 622 a response message comprising information enabling the UE 1 to identify the PDU Session may comprise receiving a logical affirmation that the Edge service is supported on the PDU Session used for sending the request message.

In the context of the example described with reference to Fig. 6A, the DNS comprises a local DNS of the current wireless network, such as a DNS server of a local edge network EHE, and the request message 611, 621 is transmitted using an existing PDU Session for a data network of the current wireless network, and wherein the information received 612, 622 indicates whether or not the Edge service is available using said existing PDU Session.

Fig. 6B illustrates an example which may be executed as an alternative to the steps 611-623 in the lower part of Fig. 6A. In this example the UE 1 is configured to use an existing PDU Session, e.g. an "Internet" PDU Session, to an operator-specific DNS server. In this context, the UDM may be configured to update 630 the operator-specific DNS server 60 with which PDU Sessions that are supported, and which Edge Service is available per PDU Session.

In this scenario, where the DNS comprises a local DNS of the current wireless network, such as an operator-specific DNS server, the request message is transmitted 631 using existing data network interface, and wherein the received information 632 indicates the data PDU Session to a local edge network on which said Edge service is available.

Upon obtaining 632 the information of the PDU Session to a local edge network on which said Edge service is available, the UE 1 is configured to use that PDU Session for accessing 633 the Edge service.

Since the DNS system is used within the local operator then the DNS query that needs to be standardized does not need to be owned by an entity that cover all operators, as for example how Rich Communications Services (RCS) has been arranged. This allows for example the usage of non-global routable DNS queries. For example, a standardized DNS query could be using a DNS SRV record with the query with <service name>.local, for example: "games.local" and then the response will be the PDU Session identity for which PDU Session that supports that edge service. This allows the UE application 215 to detect if a specific edge services is available and where it is available. This allows the usage of existing smart phone OS as is, without implementation and exposure in APIs to applications of new URSP rules. Operators that support edge services needs to add an entry in the DNS with mapping of the Edge service name and the PDU Session identifier and then the application will work in any network regardless of the different names of the PDU Sessions. This allows for an improvement for accessing Edge services that minimizes re-work on the UE side, while accomplishing an improvement in network signaling and data transfer related to use of edge applications.

According to a second aspect, the proposed solution entails that the application in the UE is able to retrieve which PDU Session that must be used for the Edge related traffic from a global DNS system. This solution proposes to use existing functionality in smartphones and avoid using URSP rules for Edge related traffic. That means that the application in the UE is responsible to setup the appropriate PDU Session.

According to this aspect, the UE configured to be able to retrieve the PDU Session configuration from the DNS system. In practice, this may be arranged similar to RCS, where GSMA hosts the DNS entries for every operator. According to the proposed example, and in contrast to what RCS provides, the DNS system shall be configured to deliver needed configuration to set up a new appropriate PDU Session, instead of normal application auto-configuration with existing network configuration.

In addition, upon obtaining PDU Session configuration, by means of a request message from the UE, an identifier of the current wireless network shall be included in the request message, such as the mobile country code (MCC) and the mobile network code (MNC) of the current wireless network in which the UE is attached. This accomplishes obtainment of appropriate PDU Session configuration from a V-PLMN 100B, for configuring the UE to access an Edge service locally in a data network connected to the CN 110B of that current wireless network 100B.

According to this aspect, the DNS system should contain, either itself or indirectly, the configuration so the application in the UE is able to set up the appropriate PDU Session. The PDU Session configuration is what that operator requires the UE to use to set up that PDU Session. There are multiple ways to use DNS system for this, it could for example be normal DNS lookup to an IP address and there a specific configuration file is stored. Another alternatives is to use for example SRV record (Service Record) in the DNS system and in that one store the PDU Session identifier that the UE application should use. The PDU Session configuration may also, where applicable, comprise information on credentials for accessing the Edge service locally.

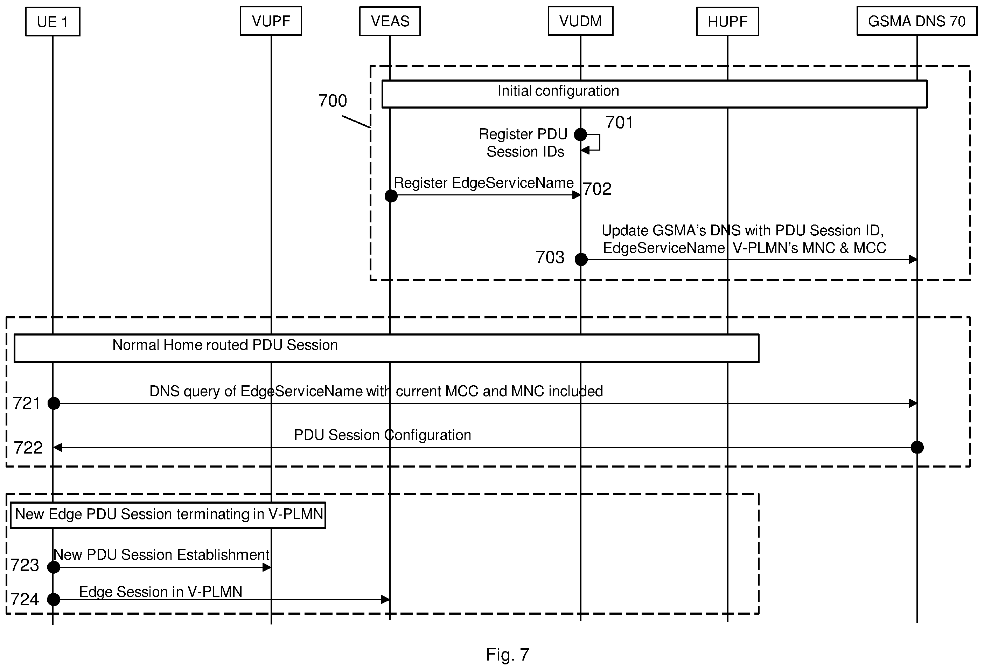

Fig. 7 provides a signaling diagram according to this second aspect of the proposed solution, which can be seen as a variant of the first aspect. Reference is here made to registration of information related to a PDU Session, and subsequently obtainment the information by a UE, associated with a VPLMN 100B, whereas the corresponding method may be carried out in wireless network 100A.

Label 700 indicates configuration in the wireless network 100B to accomplish enablement of the UE 1 to obtain a data network interface, i.e. a PDU Session, for using an Edge service. This provides a method for use in the CN 110B of the wireless network 100B to enable the UE 1 to obtain a data network interface, such as a PDU Session, for using an Edge service. According to this aspect, the method may be set out in a network function, such as a UDM of the CN 110B, in which existing PDU Sessions are registered 701. The method comprises:
Receiving 702, by the network function (UDM), a registration message from at least one Edge application server, EAS, accessible from a data network comprised in the wireless network 100B and having an identified PDU Session. This corresponds to Step 401.

Providing 703, by the network function (UDM) responsive to receiving the registration message, a global DNS server 70 with information identifying association of the EAS with the PDU Session, wherein said information is usable by the UE for identifying the PDU Session for accessing the Edge service. This corresponds to Step 402. In this context, the information may identify the wireless network where that EAS is accessible, e.g. MCC/MNC.

In this context, the CN 110B of the wireless network 100B comprises:
logic circuitry 310 configured to realize a CN function such as the UDM; and
a communication interface 313 allowing the CN function to communicate with an EAS, or an application function, AF, operating for the EAS;
wherein the logic circuitry controls the CN to operate to enable the UE 1 to obtain a PDU Session for accessing an Edge service.

The global DNS server 70 may be external to the wireless network 100B configured to support a plurality of wireless networks 100A, 100B. The information provided to the global DNS server 70 may comprise an identifier of the PDU Session, such as a PDU session ID, an indication of the supported Edge service, and an identifier of the wireless network, e.g. MNC, MCC.

By means of the proposed solution, a central entity is configured by means of the global DNS server 70, from which the UE 1 may obtain information enabling the UE 1 to identify, i.e. to determine, the PDU Session for accessing the Edge service locally in the current wireless network. This is illustrated in the lower part of Fig. 7. In this context, the information may comprise PDU Session configuration to set up a new PDU Session.

According to this aspect, a method is provided for use in the UE 1 for identifying a PDU Session of a current wireless network 110B, i.e. the wireless network in which the UE 1 is located and typically connected, for accessing an Edge service. The method comprises:
transmitting 721, to at least one network node comprising a global DNS server 70, a request message comprising an indication of the Edge service to obtain identification of the PDU Session associated with the Edge service. This corresponds to Step 501.
receiving 722, from the global DNS server 70, a response message comprising information enabling the UE 1 to identify, i.e. to determine, the PDU Session and PDU Session configuration to set up a new PDU Session for accessing the Edge service. This corresponds to Step 502. The information may in this context comprise PDU Session configuration, wherein the UE 1 is enabled to establish a new PDU Session based on the PDU Session configuration.

In this context, the request message may be sent in the form of a DNS query, to the global DNS server 70, further comprising an identifier of the current wireless network 100B, e.g. MNC, MCC. The information received 722 may comprise PDU Session configuration for establishing the PDU Session on which the indicated Edge service is available.

In step 723, the PDU Session is established to obtain connection to the associated data network, based on the received PDU Session configuration. This corresponds to Step 503.Using the established PDU Session, the UE may then access 724 the Edge service locally in the current wireless network 100B. This corresponds to Step 504.

According to various examples of the second aspect, syntax of the DNS query, i.e. the request message 721 that contain the V-PLMN's identity, could take the form of: config.edge.cmnc<Current-MNC>.cmcc<Current-MCC>.pub.3gppnetwork.org

According to one example, it may be standardized what type of DNS record that should be used and how the PDU Session configuration is stored in it. It could for example be a SRV record where the "target" is the PDU Session identifier. As an alternative, a pointer may be held in the global DNS server 70, referring to a configuration file that contains the PDU Session configuration.

When the UE 1 establishes a new PDU Session according to the obtained information, the UE 1 is thereby configured to bind the edge related traffic to always use that PDU Session for that Edge service. This way, the Edge application 215 in the UE 1 is prevented from switching from the associated PDU Session and changing to another connection based on best effort.

According to a third, the proposed solution entails that the application in the UE is able to retrieve which PDU Session that must be used for the Edge related traffic from an Edge Application server hosted in the cloud. It is a known concept as such that one scenario for hosting an edge service is that in addition to the local edge services in the different operators network, the application provider will also host the Edge service in the cloud. This allows the service to be available everywhere regardless of whether a local edge service exist or not. This allows edge performance whenever possible.

According to this aspect, the proposed solution is based on a CN function of a wireless network, such as the SMF, exposes information comprising needed PDU Session configuration to the AF or the local EAS. Then the EAS forwards that configuration to the cloud instance, here referred to as the cloud EAS or global EAS.

In this context, an exposure interface may be provided from SMF or UDM and NEF to AF/EAS, which exposure interface exposes configuration and identity to set up (establish) or use existing PDU Sessions that is supported in the network for edge services, this allows the AF/EAS to provide the mapping of which edge service that is supported per PDU Session ID in that operator network.

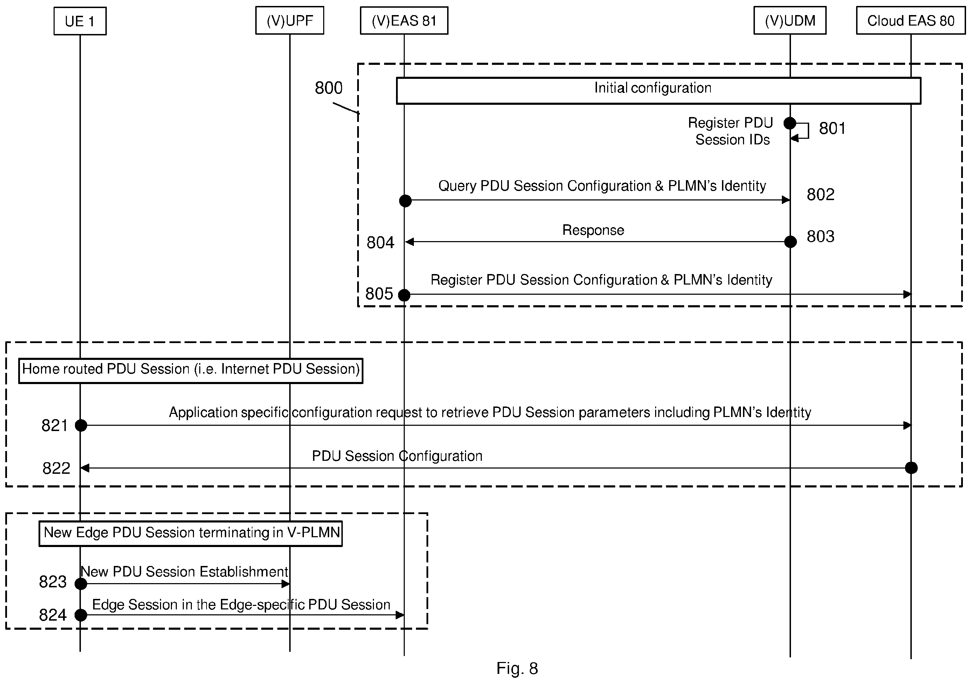

Fig. 8 provides a signaling diagram according to this third aspect of the proposed solution, which can be seen as a variant of the second aspect. Reference is here made to registration of information related to a PDU Session, and subsequently obtainment the information by a UE, associated with a VPLMN 100B, whereas the corresponding method may be carried out in wireless network 100A.

Label 800 indicates configuration in the wireless network 100B to accomplish enablement of the UE 1 to obtain a data network interface, i.e. a PDU Session, for using an Edge service. This provides a method for use in the CN 110B of the wireless network 100B to enable the UE 1 to obtain a data network interface, such as a PDU Session, for using an Edge service. According to this aspect, the method may be set out in a network function, such as a UDM of the CN 110B, in which existing PDU Sessions are registered 801. The method comprises:
Receiving 802, by the network function (UDM), a registration message from at least one Edge application server, EAS, 81 accessible from a data network comprised in the wireless network 100B and having an identified PDU Session. This corresponds to Step 401.

Providing 803, by the network function (UDM) responsive to receiving the registration message, the EAS with information identifying association of the EAS 81 with the PDU Session, wherein said information is usable by the UE for identifying, i.e. determining, the PDU Session for accessing the Edge service. This corresponds to Step 402.

In this context, the CN 110B of the wireless network 100B comprises:
logic circuitry 310 configured to realize a CN function such as the UDM; and
a communication interface 313 allowing the CN function to communicate with an EAS 81, or an application function, AF, operating for the EAS;
wherein the logic circuitry controls the CN to operate to enable the UE 1 to obtain a PDU Session for accessing an Edge service.

The providing of the information to the local EAS 81 controls the local EAS 81 to transmit 805 said configuration and an identifier of the wireless network to the cloud EAS 80. The global EAS 80 may be external to the wireless network 100B and configured to support a plurality of wireless networks 100A, 100B. The information provided to the global EAS 80 may comprise an identifier of the PDU Session, such as a PDU session ID and PDU Session configuration to set up a new PDU Session, an identifier of the wireless network, e.g. MNC, MCC, and optionally an indication of the supported Edge service.

By means of the proposed solution, a central entity is configured by means of the global EAS 80, from which the UE 1 may obtain information enabling the UE 1 to identify the PDU Session for accessing the Edge service locally in the current wireless network. This is illustrated in the lower part of Fig. 8.

According to this aspect, a method is provided for use in the UE 1 for identifying a PDU Session of a current wireless network 110B, i.e. the wireless network in which the UE 1 is located and typically connected, for accessing an Edge service. The method comprises:
transmitting 821, to at least one network node comprising a global EAS 80, a request message to obtain identification of the PDU Session associated with the Edge service. This request may also include an indication of the Edge service. This correlates to Step 501, but where the indication of the Edge service is optional.

Receiving 822, from said global EAS 80, a response message comprising information enabling the UE 1 to identify, i.e. determine, the PDU Session for accessing the Edge service. This corresponds to Step 502.

It may be noted that where the global, or cloud, EAS 80 is service-specific for a certain Edge service, the indication of the Edge service may be implicit by the transmission of the request message.

In this context, the request message may an application-specific configuration request to retrieve parameters for PDU Session configuration, including an identifier for the current wireless network in which the UE 1 is located, e.g. MNC or MCC. The information received 822 may comprise PDU Session configuration for establishing the PDU Session on which the indicated Edge service is available locally in the current wireless network 100B.

In step 823, the PDU Session is established to obtain connection to the associated local data network, based on the received PDU Session configuration. This corresponds to Step 503. Using the established PDU Session, the UE may then access 824 the Edge service locally in the current wireless network 100B. This corresponds to Step 504.

By means of the proposed solution, the UE application 215 thus connects to the cloud instance 80, which may be a single point of entry for that edge service known to the application client 215. From there the UE application 215 gets all needed configuration to set up needed PDU Session for the current wireless network 100B. The response message may configure the UE 1 to transmit data packets associated with the Edge service to the established PDU Session.

## Claims

1. A method for use in a core network, CN, of a wireless network to enable User Equipment, UE, to obtain a data network interface for using an Edge service, the method comprising:
receiving (401), by a network function of the CN, a registration message from at least one Edge application server, EAS, accessible from a data network comprised in the wireless network and having said data network interface;
providing (402), by the network function responsive to receiving the registration message, a network node with information identifying association of the EAS with the data network interface, wherein said information is usable by the UE for identifying the network interface for accessing the Edge service.

2. The method of claim 1, wherein said registration message (602, 702, 802) identifies said Edge service, wherein said information identifies association of the Edge service on said EAS with the data network interface.

3. The method of claim 1 or 2, wherein said network node is a domain name system, DNS, server which is accessible by the UE, wherein the DNS server comprises either:
a local DNS server (60, 62, 64) of said data network; or
a global DNS server (70) which is external to the wireless network and supporting a plurality of wireless networks and wherein said information comprises an identifier (MNC, MCC) of the wireless network

4. The method of claim 1, wherein the network node is the EAS (81) which transmitted the registration message, wherein said information comprises configuration for establishing the data network interface.

5. The method of claim 4, wherein the step of providing the information to the EAS (81) controls the EAS (81) to transmit said configuration and an identifier of the wireless network to a global EAS (80) configured to support a plurality of wireless networks, which global EAS is accessible by the UE.

6. A core network, CN, (110A, 110B) of a wireless network (100A, 100B), comprising:
logic circuitry (310) configured to realize a CN function (UDM); and
a communication interface (313) allowing the CN function to communicate with a network node;
wherein the logic circuitry controls the CN to operate in accordance with any of claims 1-5 to enable User Equipment, UE (1), to obtain a data network interface for accessing an Edge service.

7. Method for use in User Equipment, UE, for identifying a data network interface of a current wireless network for accessing an Edge service, the method comprising:
transmitting (501), to at least one network node, a request message comprising an indication of the Edge service to obtain identification of the data network interface associated with the Edge service;
receiving (502), from one of said nodes, a response message comprising information enabling the UE to identify the data network interface for accessing the Edge service.

8. The method of claim 7, wherein said response message configures the UE to transmit data packets associated with the Edge service to said data network interface.

9. The method of claim 7 or 8, wherein said at least one network node comprises a local domain name system, DNS, server (62, 64) of the current wireless network, the request message being transmitted using an existing data network interface for a data network of the current wireless network, and wherein said information indicates whether or not the Edge service is available using said existing data network interface.

10. The method of claim 7 or 8, wherein said at least one network node comprises a local domain name system, DNS, server (60) of the current wireless network, and the request message is transmitted using existing data network interface, and wherein the information indicates the data network interface to a local edge network, EHE2, on which said Edge service is available.

11. The method of claim 7 or 8, wherein said at least one network node comprises a global domain name system, DNS, server (70) supporting a plurality of wireless networks, wherein the request message comprises an identifier (MNC, MCC) of the current wireless network that the UE is connected to.

12. The method of claim 7, wherein said at least one node comprises an Edge application server, EAS, (81) of the current wireless network, wherein the request message comprises an identifier (MNC, MCC) of the current wireless network.

13. The method of any of claims 7-11, wherein said information comprises data network interface configuration for establishing the data network interface.

14. User Equipment, UE (1), comprising:
a wireless transceiver (213);
logic circuitry (210) configured to control the transceiver to operate in accordance with any of claims 7-13 for identifying a data network interface of a current wireless network for accessing an Edge service.

15. Method for use in User Equipment, UE, for identifying a data network interface of a current wireless network for accessing an Edge service, the method comprising:
transmitting (501), to a cloud Edge application server, EAS (80), a request message to obtain identification of the data network interface associated with the Edge service;
receiving (502), the cloud EAS, a response message comprising information enabling the UE to determine the data network interface for accessing the Edge service.

## Patentansprüche

1. Verfahren zur Verwendung in einem Kernnetzwerk (CN) eines drahtlosen Netzwerks, um es einer Benutzerausrüstung (UE) zu ermöglichen, eine Datennetzwerkschnittstelle zur Nutzung eines Edge-Dienstes zu erhalten, wobei das Verfahren umfasst:
Empfangen (401), durch eine Netzwerkfunktion des CN, einer Registrierungsnachricht von mindestens einem Edge-Anwendungsserver (EAS), der von einem in dem drahtlosen Netzwerk umfassten Datennetzwerk aus zugänglich ist und die Datennetzwerkschnittstelle aufweist;
Bereitstellen (402), durch die Netzwerkfunktion als Reaktion auf das Empfangen der Registrierungsnachricht, eines Netzwerkknotens mit Informationen, die eine Zuordnung des EAS zu der Datennetzwerkschnittstelle identifizieren, wobei die Informationen durch die UE zur Identifizierung der Netzwerkschnittstelle für den Zugriff auf den Edge-Dienst verwendbar sind.

2. Verfahren nach Anspruch 1, wobei die Registrierungsnachricht (602, 702, 802) den Edge-Dienst identifiziert, wobei die Information die Zuordnung des Edge-Dienstes auf dem EAS mit der Datennetzwerkschnittstelle identifiziert.

3. Verfahren nach Anspruch 1 oder 2, wobei der Netzwerkknoten ein Domain-Name-System-Server (DNS-Server) ist, der für die UE zugänglich ist, wobei der DNS-Server umfasst entweder:
einen lokalen DNS-Server (60, 62, 64) des Datennetzes; oder
einen globalen DNS-Server (70), der extern zu dem drahtlosen Netzwerk ist und eine Vielzahl von drahtlosen Netzwerken unterstützt und wobei die Informationen eine Kennung (MNC, MCC) des drahtlosen Netzwerks umfassen.

4. Verfahren nach Anspruch 1, wobei der Netzwerkknoten das EAS (81) ist, welches die Registrierungsnachricht übertragen hat, wobei die Informationen eine Konfiguration zum Aufbau der Datennetzwerkschnittstelle umfassen.

5. Verfahren nach Anspruch 4, wobei der Schritt des Bereitstellens der Informationen an das EAS (81) das EAS (81) steuert, um die Konfiguration und eine Kennung des drahtlosen Netzwerks an ein globales EAS (80) zu übertragen, das konfiguriert ist, um eine Vielzahl von drahtlosen Netzwerken zu unterstützen, wobei das globale EAS für die UE zugänglich ist.

6. Kernnetzwerk (CN) (110A, 110B) eines drahtlosen Netzwerks (100A, 100B), umfassend:
Logikschaltung (310), die konfiguriert ist, um eine CN-Funktion (UDM) zu realisieren; und
eine Kommunikationsschnittstelle (313), die es der CN-Funktion ermöglicht, mit einem Netzwerkknoten zu kommunizieren;
wobei die Logikschaltung das CN steuert, damit es nach einem der Ansprüche 1 bis 5 arbeitet, um es einer Benutzerausrüstung (UE) (1) zu ermöglichen, eine Datennetzwerkschnittstelle zum Zugriff auf einen Edge-Dienst zu erhalten.

7. Verfahren zur Verwendung in einer Benutzerausrüstung (UE) zum Identifizieren einer Datennetzwerkschnittstelle eines aktuellen drahtlosen Netzwerks für den Zugriff auf einen Edge-Dienst, wobei das Verfahren umfasst:
Übertragen (501) einer Anfragenachricht, die eine Angabe des Edge-Dienstes umfasst, um eine Identifikation der mit dem Edge-Dienst assoziierten Datennetzwerkschnittstelle zu erhalten, an mindestens einen Netzwerkknoten;
Empfangen (502) einer Antwortnachricht von einem der Knoten, wobei die Antwortnachricht Informationen umfasst, die es der UE ermöglichen, die Datennetzwerkschnittstelle zum Zugriff auf den Edge-Dienst zu identifizieren.

8. Verfahren nach Anspruch 7, wobei die Antwortnachricht die UE konfiguriert, um Datenpakete, die dem Edge-Dienst zugeordnet sind, an die Datennetzwerkschnittstelle zu übertragen.

9. Verfahren nach Anspruch 7 oder 8, wobei der mindestens eine Netzwerkknoten einen lokalen Domain-Name-System-Server (DNS-Server) (62, 64) des aktuellen drahtlosen Netzwerks umfasst, wobei die Anfragenachricht unter Verwendung einer bestehenden Datennetzwerkschnittstelle für ein Datennetzwerk des aktuellen drahtlosen Netzwerks übertragen wird, und wobei die Informationen anzeigen, ob der Edge-Dienst unter Verwendung der bestehenden Datennetzwerkschnittstelle verfügbar ist oder nicht.

10. Verfahren nach Anspruch 7 oder 8, wobei der mindestens eine Netzwerkknoten einen lokalen Domain-Name-System-Server (DNS-Server) (60) des aktuellen drahtlosen Netzwerks umfasst, und die Anfragenachricht unter Verwendung einer bestehenden Datennetzwerkschnittstelle übertragen wird, und wobei die Information die Datennetzwerkschnittstelle zu einem lokalen Edge-Netzwerk (EHE2) angibt, auf dem der Edge-Dienst verfügbar ist.

11. Verfahren nach Anspruch 7 oder 8, wobei der mindestens eine Netzwerkknoten einen globalen Domain Name System-Server (DNS-Server) (70) umfasst, der eine Vielzahl von drahtlosen Netzwerken unterstützt, wobei die Anfragenachricht eine Kennung (MNC, MCC) des aktuellen drahtlosen Netzwerks umfasst, mit dem die UE verbunden ist.

12. Verfahren nach Anspruch 7, wobei der mindestens eine Knoten einen Edge-Anwendungsserver (EAS) (81) des aktuellen drahtlosen Netzwerks umfasst, wobei die Anfragenachricht eine Kennung (MNC, MCC) des aktuellen drahtlosen Netzwerks umfasst.

13. Verfahren nach einem der Ansprüche 7 bis 11, wobei die Informationen eine Datennetzwerk-Schnittstellenkonfiguration zum Aufbau der DatennetzwerkSchnittstelle umfassen.

14. Benutzerausrüstung (UE) (1), umfassend:
einen Drahtlossendeempfänger (213);
Logikschaltung (210), die konfiguriert ist, um den Sendeempfänger zu steuern, damit er nach einem der Ansprüche 7 bis 13 arbeitet, um eine Datennetzwerkschnittstelle eines aktuellen drahtlosen Netzwerks zum Zugriff auf einen Edge-Dienst zu identifizieren.

15. Verfahren zur Verwendung in einer Benutzerausrüstung (UE) zum Identifizieren einer Datennetzwerkschnittstelle eines aktuellen drahtlosen Netzwerks für den Zugriff auf einen Edge-Dienst, wobei das Verfahren umfasst:
Übertragen (501) einer Anfragenachricht an einen Cloud-Edge-Anwendungsserver (EAS) (80), zum Erhalten einer Identifikation der Datennetzwerkschnittstelle, die mit dem Edge-Dienst verknüpft ist;
Empfangen (502), durch den Cloud-EAS, einer Antwortnachricht, die Informationen umfasst, die es der UE ermöglichen, die Datennetzwerkschnittstelle für den Zugriff auf den Edge-Dienst zu bestimmen.

## Revendications

1. Procédé destiné à être utilisé pour un réseau central, CN, d'un réseau sans fil afin de permettre à un équipement utilisateur, UE, d'obtenir une interface de réseau de données pour l'utilisation d'un service Edge, le procédé comprenant :
la réception (401), par une fonction réseau du CN, d'un message d'enregistrement provenant d'au moins un serveur d'application Edge, EAS, accessible à partir d'un réseau de données compris dans le réseau sans fil et ayant ladite interface de réseau de données ;
la fourniture (402), par la fonction réseau en réponse à la réception du message d'enregistrement, d'un nœud de réseau avec des informations identifiant l'association de l'EAS avec l'interface de réseau de données, dans lequel lesdites informations sont utilisables par l'UE pour identifier l'interface de réseau pour l'accès au service Edge.

2. Procédé selon la revendication 1, dans lequel ledit message d'enregistrement (602, 702, 802) identifie ledit service Edge, dans lequel lesdites informations identifient une association du service Edge sur ledit EAS avec l'interface de réseau de données.

3. Procédé selon la revendication 1 ou 2, dans lequel ledit nœud de réseau est un serveur de système de nom de domaine, DNS, qui est accessible par l'UE, dans lequel le serveur DNS comprend :
un serveur DNS local (60, 62, 64) dudit réseau de données ; ou
un serveur DNS global (70) qui est externe au réseau sans fil et prend en charge une pluralité de réseaux sans fil, et dans lequel lesdites informations comprennent un identifiant (MNC, MCC) du réseau sans fil.

4. Procédé selon la revendication 1, dans lequel le nœud de réseau est l'EAS (81) qui a transmis le message d'enregistrement, dans lequel lesdites informations comprennent une configuration permettant d'établir l'interface de réseau de données.

5. Procédé selon la revendication 4, dans lequel l'étape consistant à fournir les informations à l'EAS (81) commande l'EAS (81) de façon à ce qu'il transmette ladite configuration et un identifiant du réseau sans fil à un EAS global (80) configuré pour prendre en charge une pluralité de réseaux sans fil, lequel EAS global est accessible par l'UE.

6. Réseau central, CN (110A, 110B) d'un réseau sans fil (100A, 100B), comprenant :
une circuiterie logique (310) configurée pour réaliser une fonction CN (UDM) ; et
une interface de communication (313) permettant à la fonction CN de communiquer avec un nœud de réseau ;
dans lequel la circuiterie logique commande le CN pour qu'il fonctionne conformément à l'une quelconque des revendications 1 à 5 afin de permettre à l'équipement utilisateur, UE (1) d'obtenir une interface de réseau de données pour l'accès à un service Edge.

7. Procédé destiné à être utilisé pour un équipement utilisateur, UE, afin d'identifier une interface de réseau de données d'un réseau sans fil actuel pour l'accès à un service Edge, le procédé comprenant :
la transmission (501), à au moins un nœud de réseau, d'un message de demande comprenant une indication du service Edge afin d'obtenir une identification de l'interface de réseau de données associée au service Edge ;
la réception (502), à partir de l'un desdits nœuds, d'un message de réponse comprenant des informations permettant à l'UE d'identifier l'interface de réseau de données pour l'accès au service Edge.

8. Procédé selon la revendication 7, dans lequel ledit message de réponse configure l'UE de façon à ce qu'il transmette des paquets de données associés au service Edge à ladite interface de réseau de données.

9. Procédé selon la revendication 7 ou 8, dans lequel ledit au moins un nœud de réseau comprend un serveur de système de nom de domaine, DNS, local (62, 64) du réseau sans fil actuel, le message de demande étant transmis à l'aide d'une interface de réseau de données existante pour un réseau de données du réseau sans fil actuel, et dans lequel lesdites informations indiquent si le service Edge est ou non disponible à l'aide de ladite interface de réseau de données existante.

10. Procédé selon la revendication 7 ou 8, dans lequel ledit au moins un nœud de réseau comprend un serveur de système de nom de domaine, DNS, local (60) du réseau sans fil actuel, et le message de demande est transmis à l'aide d'une interface de réseau de données existante, et dans lequel les informations indiquent l'interface de réseau de données à un réseau périphérique local, EHE2, sur lequel ledit service Edge est disponible.

11. Procédé selon la revendication 7 ou 8, dans lequel ledit au moins un nœud de réseau comprend un serveur de système de nom de domaine, DNS, global (70) prenant en charge une pluralité de réseaux sans fil, dans lequel le message de demande comprend un identifiant (MNC, MCC) du réseau sans fil actuel auquel l'UE est connecté.

12. Procédé selon la revendication 7, dans lequel ledit au moins un nœud comprend un serveur d'application Edge, EAS (81), du réseau sans fil actuel, dans lequel le message de demande comprend un identifiant (MNC, MCC) du réseau sans fil actuel.

13. Procédé selon l'une quelconque des revendications 7 à 11, dans lequel lesdites informations comprennent une configuration d'interface de réseau de données permettant d'établir l'interface de réseau de données.

14. Équipement utilisateur, UE (1), comprenant :
un émetteur-récepteur sans fil (213) ;
une circuiterie logique (210) configurée pour commander l'émetteur-récepteur pour qu'il fonctionne conformément à l'une quelconque des revendications 7 à 13 afin d'identifier une interface de réseau de données d'un réseau sans fil actuel pour l'accès à un service Edge.

15. Procédé destiné à être utilisé pour un équipement utilisateur, UE, afin d'identifier une interface de réseau de données d'un réseau sans fil actuel pour l'accès à un service Edge, le procédé comprenant :
la transmission (501), à un serveur d'application Edge, EAS (80), en nuage, d'un message de demande pour obtenir une identification de l'interface de réseau de données associée au service Edge ;
la réception (502), par l'EAS en nuage, d'un message de réponse comprenant des informations permettant à l'UE de déterminer l'interface de réseau de données pour l'accès au service Edge.
